# EUROPEAN PATENT SPECIFICATION

(11) **EP 2 837 838 B1**
(45) Date of publication and mention of the grant of the patent: **06.12.2017**
(21) Application number: 13769988.0
(22) Date of filing: 22.03.2013
(51) Int. Cl.: F16C 33/14, B22F 7/00, F16C 17/02, F16C 35/02, F16C 33/12, F16C 17/12

(54) **SLIDING MEMBER AND METHOD FOR MANUFACTURING SLIDING MEMBER**
GLEITELEMENT UND VERFAHREN ZUR HERSTELLUNG DES GLEITELEMENTS
ÉLÉMENT COULISSANT ET PROCÉDÉ DE FABRICATION DE L'ÉLÉMENT COULISSANT

(30) Priority: 30.03.2012 JP 2012079808
(43) Date of publication of application: 18.02.2015
(73) Proprietor: Taiho Kogyo Co., Ltd., Toyota-shi Aichi 471-8502 (JP)
(72) Inventor: KODAMA Hayato, Toyota-shi Aichi 471-8502 (JP); MATSUMOTO Shinji, Toyota-shi Aichi 471-8502 (JP); KATO Shinichi, Toyota-shi Aichi 471-8502 (JP); TOMIKAWA Takashi, Toyota-shi Aichi 471-8502 (JP); HAYAKAWA Hiroaki, Toyota-shi Aichi 471-8502 (JP); NAKANE Takanori, Toyota-shi Aichi 471-8502 (JP)
(74) Representative: Jostarndt Patentanwalts-AG
(86) International application number: PCT/JP2013/058362
(87) International publication number: WO 2013/146608

(56) References cited:
- GB-A- 2 447 855
- JP-A- H0 439 409
- JP-A- 2006 038 181
- JP-A- 2006 220 257
- JP-B2- 2 865 036
- JP-B2- 4 842 283
- JP-Y2- S 628 418

## Description

### TECHNICAL FIELD

The present invention is related to technology of a sliding member and a method of manufacturing the sliding member, more specifically, a technology for manufacturing a sliding member which is excellent in both strength and workability.

### BACKGROUND ART

Conventionally, in various machines such as construction equipment and automobiles, a sliding member such as a sliding bearing is used in order to rotate a shaft inserted into a housing and techniques relating thereto are also disclosed (for example, see Patent Literatures 1 and 2).

### Citation List

### Patent literature

PTL1: Japanese Laid Open Patent 2007-85363
PTLt 2: Japanese Laid Open Patent 2007-333185
PTLt3: Great Britain Lad Open Patent 2 447 855 A
PTLt4: Japanese Laid Open Patent 2006-220257 A

### SUMMARY OF THE INVENTION

### PROBLEMS TO BE SOLVED BY THE INVENTION

According to the technique described in Patent Literature 1, a sheet material having a two layer structure is molded by sintering a metal powder on a back metal plate, the sheet material is molded into a cylindrical shape an and formed into a sliding member. In addition, according to the technique described in Patent Literature 2, a cylindrical sintered material is press fitted into an inner periphery part of a cylindrical back metal to form a sliding member.

However, according to the technique described in Patent Literature 1, because the hardness of the back metal is also increased when performing a heat treatment on the sliding member, seizure sometimes occurred in the metal back part of the slide member when it is pressed into a housing. In addition, since the plate thickness of the sliding member thick overall, the level of difficulty when molding into a cylindrical shape was higher

On the other hand, according to the technique described in Patent Literature 2, it was difficult to increase the processing accuracy of a cylindrical sintered material or collar. In addition, since the sintered material has high brittleness, there was a possibility that cracking occurs when the sintered material is pressed into the back metal. In addition, because a cylindrical member instead of a plate-like member is used from the beginning, there was a limit to the formation of grooves or indentations.

Patent Literature 3 discloses an iron-based sinter multilayer wound bush. The iron-based sinter multilayer wound bush is characterized by comprising a back metal steel plate, an iron-based sinter sliding material layer sinter-bonded onto the back metal steel plate, a diffusing layer of iron-based alloy particles provided near the bonded interface of the iron-based sinter sliding material layer and the back metal steel plate, and a Cu alloy phase provided around the bonded interface and extended on the bonded interface side.

Patent Literature 4 discloses a sliding bearing comprising a plurality of segments. Each segment consists of a base material formed of a cemented carbide, a diamond sintered body formed on the base material, and a back metal arranged on the back side of the base material. The surface of the diamond sintered body is slid on a sleeve formed of a cemented carbide and fixed to a pump main shaft. The peripheral rate of the segments is set to be 60% or more, and the number of the segments in the peripheral direction is set to be 17 or more.

Given the circumstances described above, the present invention provides a sliding member and method of manufacturing a sliding member in which seizure is unlikely to occur in the back metal part of the sliding member when pressed into a housing, is hard to crack, and is easy to mold groves or indentations.

### MEANS FOR SOLVING THE PROBLEM

The problem to be solved by the present invention is as described above and a means for solving the problem is explained below.

That is, in the first aspect, a sliding member is provided including forming a bimetal sintered alloy by sintering a metal powder on a surface of a back metal which is a plate shaped metal member, molding the sintered alloy into a cylindrical bush, performing a heat treatment on the bush, and press-fitting the bush into a collar which is a cylindrical metal member.

In the second aspect, a hardness of a sintered layer in the bush is formed greater than a hardness of the back metal, and the hardness of the back metal is formed greater than a hardness of the collar.

In the third aspect, a bimetal sintered alloy is formed by sintering a metal powder on a surface of a back metal which is a plate shaped metal member; the sintered alloy is molded into a cylindrical bush, a heat treatment is performed on the bush, and the bush is press-fitted into a collar which is a cylindrical metal member.

In the fourth aspect, a hardness of a sintered layer in the bush is formed greater than a hardness of the back metal, and the hardness of the back metal is formed greater than a hardness of the collar.

### EFFECTS OF THE INVENTION

The following effects are demonstrated as an effect of the present invention.

According to the sliding member manufacturing method of the sliding member related to the present invention, seizure is unlikely to occur in the back metal part of a sliding member when is pressed into a housing, is difficult to break and it is possible to easily mold grooves or indentations.

### BRIEF DESCRIPTION OF THE DRAWINGS

Fig. 1 shows each process in a method for manufacturing a sliding member according to a first embodiment.
Fig. 2 (a) and (b) respectively show a cross sectional view in an axial direction sectional of the sliding member according to the first and second embodiments.
Fig. 3 (a) and (b) respectively show a manufacturing method of a collar according to another embodiment.
Fig. 4 shows each process in a method for manufacturing a sliding member according to a third embodiment.
Fig. 5 (a) is a cross sectional view in an axial direction of a sliding member according to the third embodiment, and (b) is similarly a cross sectional view in an axial direction showing the state in which a shaft is inserted through the sliding member.
Fig. 6 (a) is a cross sectional view in an axial direction of a sliding member according to the third embodiment, and (b) is similarly a cross sectional view in an axial direction showing the state in which a shaft is inserted through the sliding member.

### DESCRIPTION OF EMBODIMENTS

### [Bearing 40]

First, a method of manufacturing a bearing 40 which is a sliding member according to the first embodiment is explained. The bearing 40 which is the sliding member according to the present embodiment is used in order to make a shaft which is inserted in a housing (no shown in the diagram) rotatable, and is used after pressing into the housing.

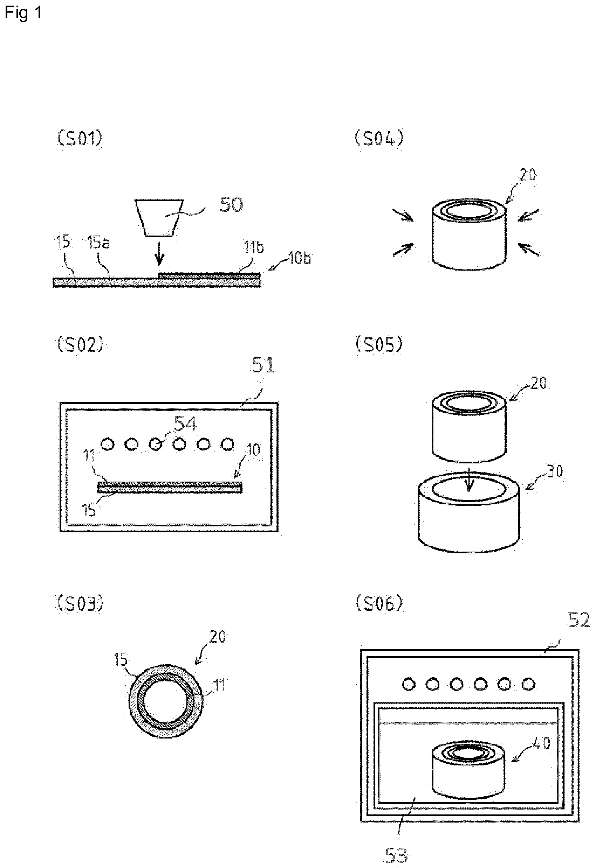

As is shown in Fig. 1, the method of manufacturing the bearing 40 according to present embodiment includes a powder coating process (step S01), a sintering-rolling process (step S02), a bush forming process (step S03), a heat treatment process (step S04), a press fitting process (step S05), and an oil-containing and finishing process (step S06). Each process is explained in detail below.

In the powder coating process shown in Fig. 1 (step S01), first a back metal 15 which is a plate-shaped metal member is prepared. An iron-based member etc. is used as the material for the back metal 15. Next, a metal powder that is uniformly mixed with mainly an iron powder and copper powder is coated on a surface 15a of the back metal 15 using a coating device 50 to form a coating layer 11b. In this way, coating layer 11b is uniformly coated on the surface of the back metal 15 and a plate shaped pre-sintering member 10b is formed.

Next, in the sintering-rolling process (step S02) shown in Fig. 1, the plate shaped pre-sintering member 10b formed in powder coating process (step S01) is placed in a sintering furnace 51 (step S02) and heated using a heater 54, and the coating layer 11b is sintered in an atmosphere of a lower temperature (for example, 800-1300°) than the melting point of the iron powder which is the main component in the coating layer 11b. As a result, the coating layer 11b becomes a porous sintered layer 11, and pre-sintering member 10b becomes a sintered alloy 10 comprised from a bimetal of the back metal 15 and sintered layer 11. In the present embodiment, by simultaneously repeating the sintering process several times and performing a rolling process for rolling the sintered alloy 10 during the sintering process with a roller, the thickness of the sintered alloy 10 is formed thinly. In addition, although the sintered alloy 10 is formed by a joint sintering method in the present embodiment, it is possible to be formed in other ways such as a single sintering method. In the case of forming a groove or indentation in the inner circumferential surface of the bearing 40, a groove or indentation may be formed in advance by a groove or indentation machining process at this stage.

Next, in a bush molding process (step S03) shown in Fig. 1, the sintered alloy 10 formed in the sintering-rolling process (step S02) undergoes a bending process by winding using a press machine or the like so that the sintered layer 11 becomes the inner side, and a cylindrical bush 20 is molded. An inner circumferential surface of bush 20 which becomes the inner circumferential surface of the bearing 40 which later becomes a sliding member is formed by this bush molding process.

Next, in the heat treatment process (step S04) shown in Fig. 1, a lining of the bush 20 is hardened by performing a heat treatment such as quenching and tempering. From this process, the hardness of the lining of the back metal 15 and sintered layer 11 is improved (for example, the back metal 15 to a Vickers hardness of 100-400, and the sintered layer 11 to a Vickers hardness of 300-800) and the strength of the bush 20 is improved.

Next, in the press fitting process (step S05) shown in Fig. 1, the bush 20 which has undergone a heat treatment is press fitted to a collar 30 which is a cylindrical metal member (for example, iron-based member), to form the bearing 40. Since the heat treatment performed on Bush 20 is not performed on collar 30, the hardness is less than the back metal 15 (for example, Vickers hardness 100 to 200). In addition, the inner diameter of the collar 30 is formed to the extent that the bush 20 can be press fitted and the same or slightly smaller than the outer diameter of the bush 20. Using this press-fitting process, the outer circumferential surface of the collar 30 which later becomes the outer peripheral surface of the bearing 40 which is a sliding member is formed.

Next, in oil-containing and finishing process (step S06) shown in Fig. 1, oil comprised from a high viscosity lubricating oil 53 is impregnated into the bearing 40 by using an oil-containing machine 52. In the oil-containing process, a high viscosity lubricating oil 53 is heated to provide low viscosity, bearing 40 is immersed in this viscosity lubricating oil 53 and left to stand in a vacuum atmosphere. In this way, while the air in the pores of the bearing 40 is sucked to the outside of the pores, the lubricating oil 53 having low viscosity is drawn into the pores of the bearing 40. When the bearing 40 that has been sucked of the lubricating oil 53 is taken out in the air and allowed to cool until room temperature, the lubricating oil 53 having low viscosity returns to the original high viscosity lubricating oil 53 in the pores of the bearing 40 and loses fluidity. In this way, it is possible to keep the high viscosity lubricating oil 53 in the pores of the bearing 40.

As described above, in the bearing 40 which is the sliding member related to the present embodiment, because the sintered layer 11 is formed by sintering a metal powder on the surface of the back metal 15 which is a plate shaped metal member, the bimetal sintered alloy 10 is formed. In addition, after the sintered alloy 10 is formed as the cylindrical bush 20 and heat treated, bush 20 is pressed arranged with three layers, the sintered layer 11, the back metal 15, and the collar 30 towards the outside from the inside. In this way, each of the hardness among the ranges of the hardness described above (sintered layer 11: 300 ∼ 800Hv, back metal 15: 100 ∼ 400Hv, collar 30: 100 ∼ 200Hv,) is preferred to be formed so that they become smaller in sequence toward the outside from the inside. In other words, the hardness of the sintered layer 11 is formed higher than the hardness of the back metal 15 and the hardness of back metal 15 is preferred to be formed higher than the collar 30.

By adopting the structure as described above, seizure is less likely to occur on the outer circumferential surface of the bearing 40 when it is pressed into the housing. Specifically, because the heat treatment is not performed on the collar 30 arranged on the outer periphery of the bearing 40, the hardness of the collar 30 is smaller compared to the back metal 15 etc. As a result, it is possible to suppress the occurrence of seizure at a part of the collar 30 which contacts the housing when it is pressed into the housing.

In addition, by arranging the collar 30 which has not been heat treated on the outer periphery, it is possible to reduce the overall hardness of the bearing 40. In this way, it is possible, it is possible to reduce the strong contact stress which are generated locally on the bearing 40, wear resistance and seizure resistance are improved and the bearing hardly cracks.

In addition, even in the case when forming the bearing 40 with a large thickness (radial direction thickness), it is possible to make the thickness of the sintered alloy 10 constant by adjusting the radial thickness of the collar 30. As a result, it is possible to easily mold even when the thickness of the bearing 40 is large.

Furthermore, according to the present embodiment, since the sintered alloy 10 is formed from the plate shaped pre-sintered member 10b and the bush 20 is molded by bending this sintered alloy 10, it is possible to easily mold without requiring molding a cylindrical component just with the a sintered material. In addition, since it is not necessary to press-fit only a sintered material having a high brittleness to a back metal, cracking never occurs when a sintered material is pressed into the back metal.

In addition, since it is possible to form grooves or indents by a groove process or indent process using in the stage of the plate shaped sintered alloy 10, it is possible to improve sliding properties of the inner peripheral surface of the bearing 40 by easily forming grooves or indentations in the inner circumferential surface of the bearing 40.

As described above, according to the present embodiment, it is able to manufacture bearings 40 providing less seizure or crack occurring in the collar 30 which is the back metal part of the bearing 40 when it is pressed into the housing, and easy forming of grooves or indentations.

### [Second Embodiment]

Next, bearing 140 which is a sliding member related to the second embodiment is explained. Furthermore, because the structure and manufacturing method of the bearing 140 explained in the present embodiment is substantially the same as the first embodiment, parts different to the first embodiment are mainly explained below.

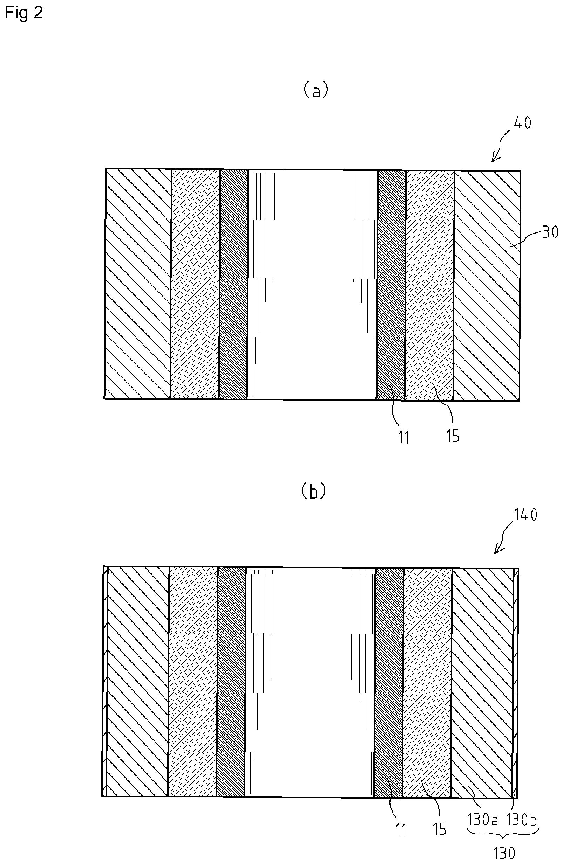

The bearing 140 which is a sliding member related to the present embodiment is formed by composing of copper plating 130b with respect to a collar body 130a at a collar 130 which is a cylindrical metal member. An iron-based member is used for example for the collar body 130a. Copper plating 130b is performed using a copper-based plating. That is, the outer peripheral surface of the collar 130 in the present embodiment is plated with a copper-based material, and copper plating 130b arranged on the outer periphery surface of the collar 130 is formed as the outer peripheral surface of the bearing 140 which is a sliding member. That is, the bearing 140 related to the present embodiment, as is shown in Fig. 2 (b), is arranged with four layers, sintered layer 11, back metal 15, collar body 130a, and copper plating 130b toward the outside from the inside.

By adopting the structure as described above, seizure is less likely to occur on the outer peripheral surface of the bearing 140 when it is pressed into the housing. More specifically, in the collar 130 arranged on the outer periphery of the bearing 140, since a heat treatment is not performed on the outer peripheral side and copper plating 130b is performed which is a copper-based member having less hardness than an iron member, the hardness on the outside of the collar 130 is less compared to the back metal 15 etc. As a result, it is possible to suppress the occurrence of seizure in a part (copper plating 130b) of the collar 130 which contacts the housing when the bearing 140 is pressed into the housing.

Furthermore, (collar 30 which is a cylindrical metal member) of the present invention may be formed by cutting from a pipe or solid material, or may be formed by putting together pairs of ends of plate shaped (band shaped) member and it is possible to appropriately select such a formation method in terms of cost and equipment. However, it is preferred to create a cheaper collar by creating a cylindrical shape from a plate-like member. In this case, a finishing process is performed in a state where the seams are closed in order to provide interference for fastening. Furthermore, in the case of forming a collar by winding a plate-shaped member, the collar may be combined in clinch shape not only by binding seams by welding.

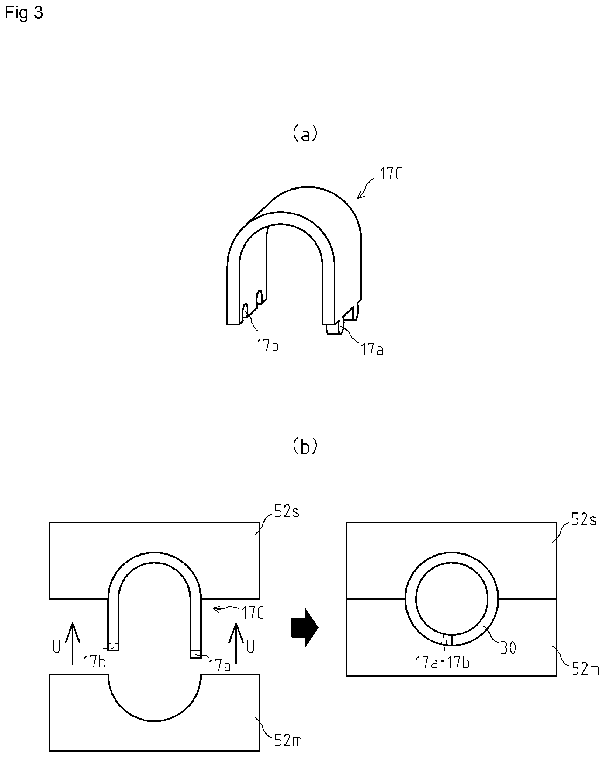

The case where the collar 30s formed from a plate shaped member and the seams bound in a clinch shape is explained below using Fig. 3. Specifically, as shown in Fig. 3 (a), the plate shaped member having a clinch shape at both ends (roughly circular engagement projection 17a and engagement recess 17b) undergoes a bending process winding using a bending or the like not shown in the diagram, and the central part forms a semi-cylindrical bending member 17C. At this time, the radius of the curvature of the inner peripheral surface of the member 17C is formed to be the roughly the same or slightly larger than the radius of the curvature outer peripheral surface of the bush 20. An outer surface of the member 17C formed by the this rough bending process becomes the outer peripheral surface of the collar 30, that is, the outer peripheral surface of the bearing 40.

Next, is as shown in Fig. 3 (b), the central part (semi-cylindrical part) of the bending member 17C is set to the side of an upper mold 52s which is a semi-cylindrical fixed mold. In addition, similarly a lower mold 52m which is a semi-cylindrical movable mold is brought close as shown by the arrow U shown in Fig. 3 (b) from the side of the end part of the bending member 17C. In this way, by deforming both side ends of the bending member 17C which is a plate shaped member along a cylindrical surface of the lower mold 52m, the clinch shape is engaged. Specifically, by allowing the engaging projection 17a to the engagement recess 17b and engaging, both side ends of the bending member 17C which is a plate shaped member are joined. In this way, the collar 30 which is the outer member is formed. Following this, bush 20 is press-fitted onto the cylindrical.

### [Bearing 40]

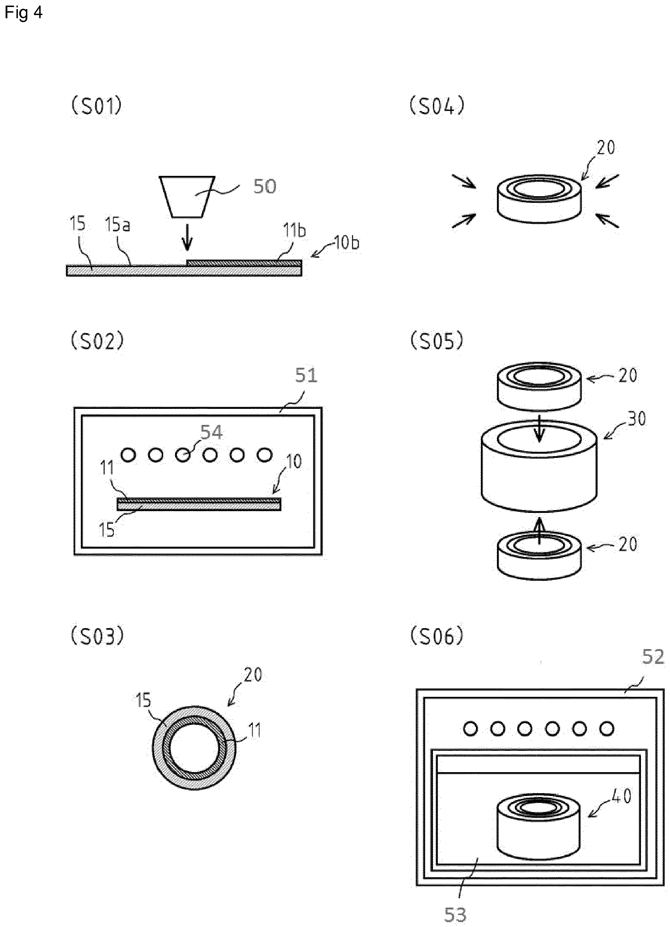

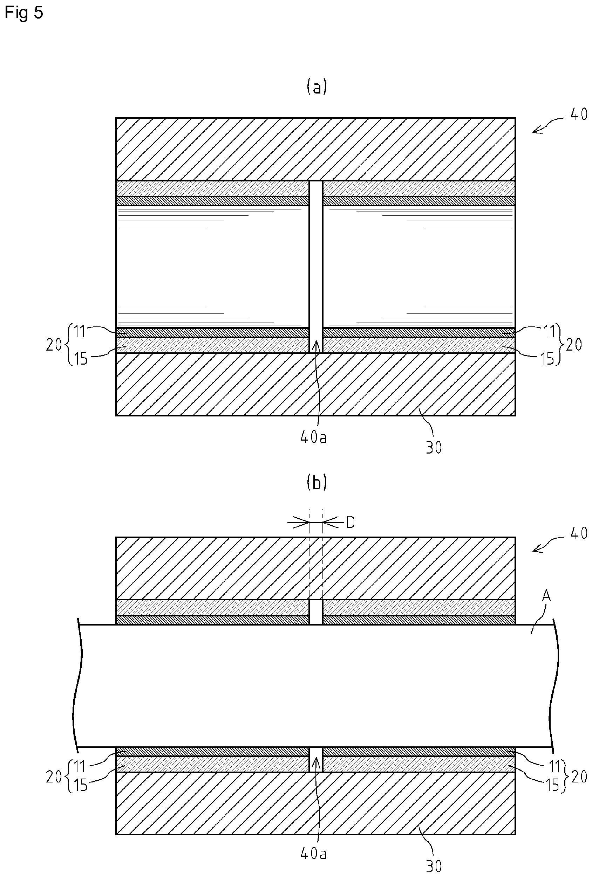

Next, a manufacturing method of bearing 40 which is a sliding member related to the third embodiment is explained using Fig. 4 and Fig. 5. The bearing 40 which is the sliding member related to the present embodiment is a sliding bearing used in order to make a shaft which is inserted in a housing not shown in the diagram rotatable and is intended to be used by pressed into the housing.

As is shown in Fig. 4, the manufacturing method of the bearing 40 related to the present embodiment, includes a powder coating process (step S01), a sintering-rolling process (step S02), a bush forming process (step S03), a heat treatment process (step S04), a press fitting process (step S05), and an oil-containing and finishing process (step S06). Each process is explained in detail below.

In the powder coating process shown in Fig. 4 (step S01), first a back metal 15 which is a plate-shaped metal member is prepared. An iron-based member etc is used as the material for the back metal 15. Next, a metal powder that is uniformly mixed with mainly an iron powder and copper powder is coated on a surface 15a of the back metal 15 using a coating device 50 to form a coating layer 11b. In this way, coating layer 11b is uniformly coated on the surface of the back metal 15 and a plate shaped pre-sintering member 10b is formed.

Next, in the sintering-rolling process (step S02) shown in Fig. 4, the plate shaped pre-sintering member 10b formed in powder coating process (step S01) is placed in a sintering furnace 51 and heated using a heater 54, and the coating layer 11b is sintered in an atmosphere of a lower temperature (for example, 800°) than the melting point of the metal powder t in the coating layer 11b. As a result, the coating layer 11b becomes a porous sintered layer 11, and pre-sintering member 10b becomes a sintered alloy 10 comprised from a bimetal of the back metal 15 and sintered layer 11. In the present embodiment, by simultaneously repeating the sintering process several times and performing a rolling process for rolling the sintered alloy 10 during the sintering process with a roller, the thickness of the sintered alloy 10 is formed thinly. In addition, although the sintered alloy 10 is formed by a joint sintering method in the present embodiment, it is possible to be formed in other ways such as a single sintering method.

Next, in a bush molding process (step S03) shown in Fig. 4, the sintered alloy 10 formed in the sintering-rolling process (step S02) undergoes a bending process by winding using a press machine or the like so that the sintered layer 11 becomes the inner side, and a cylindrical bush 20 is molded. At this time, two bushes 20 are molded for one bearing 40. By using this bush molding process, an inner circumferential surface of bush 20 which becomes the inner circumferential surface of the bearing 40 which later becomes a sliding member is formed.

Next, in the heat treatment process (step S04) shown in Fig. 4, a surface reforming process of the bush 20 is performed by performing a heat treatment such as quenching and tempering. From this process, the surface hardness of the back metal 15 and sintered layer 11 is improved (for example, the back metal 15 to a Vickers hardness of 150∼400, and the sintered layer 11 to a Vickers hardness of 300-800) and the strength of the bush 20 is improved. Furthermore, the surface reforming process is not limited to a carburizing process method. For example, a nitride or carburizing nitride process method or other process for improving surface hardness is possible.

Next, in the press fitting process (step S05) shown in Fig 4, two bushes 20, 20 which have undergone a heat treatment are each press fitted to a collar 30 which is a cylindrical metal member (for example, iron-based member), from both sides (from a vertical direction in Fig. 4) to form the bearing 40. Using this press-fitting process, the outer circumferential surface of the collar 30 which later becomes the outer peripheral surface of the bearing 40 which is a sliding member is formed. At this time, as is shown in Fig. 5 (a), the bushes 20, 20 are press-fitted so that a gap is formed between the bushes 20, 20 in the inner peripheral surface of the collar 30, and the gap formed between the bushes 20, 20 is configured as a groove 40a for lubricating oils 53. In other words, the width of the gap formed between the bushes 20, 20 becomes the width D of the groove 40a. In this way, as is shown in Fig. 5 (b), shaft A is inserted on an inner peripheral surface of the bearing 40, the groove 40a functions so that lubricating oil 53 passes through therein.

Furthermore, since the heat treatment performed on bush 20 is not performed on collar 30, the surface hardness is less than the back metal 15 (for example, Vickers hardness 50 to 200). In addition, the inner diameter of the collar 30 is formed to the extent that the bush 20 can be press fitted and the same or slightly smaller than the outer diameter of the bush 20.

Next, in oil-containing and finishing process (step S06) shown in Fig. 4, oil comprised from a high viscosity lubricating oil 53 is impregnated into the bearing 40 by using an oil-containing machine 52. In the oil-containing process, a high viscosity lubricating oil 53 is heated to provide low viscosity, bearing 40 is immersed in this viscosity lubricating oil 53 and left to stand in a vacuum atmosphere. In this way, while the air in the pores of the bearing 40 is sucked to the outside of the pores, the lubricating oil 53 having low viscosity is drawn into the pores of the bearing 40. When the bearing 40 that has been sucked of the lubricating oil 53 is taken out in the air and allowed to cool until room temperature, the lubricating oil 53 having low viscosity returns to the original high viscosity lubricating oil 53 in the pores of the bearing 40 and loses fluidity. In this way, it is possible to keep the high viscosity lubricating oil 53 in the pores of the bearing 40.

As described above, as is shown in Fig. 5 (a) and (b) in the bearing 40 which is a sliding member related to the present embodiment, a plurality of bushes 20, 20 (two in this embodiment) which are cylindrical members are press-fitted into the collar 30 which is a cylindrical members, thereby groove 40a is formed between the bushes 20, 20 in the inner peripheral surface of the collar 30 which functions as groove 40a for lubricating oil 53.

By adopting the structure described above, because it is possible to form a groove 40a for lubricating oils 53 by simply pressing bushes 20, 20 into the collar 30, there is no need to perform the grooving and indentation processes separately. That is, it is possible to easily form grooves or indentations in the inner circumferential surface of the bearing 40, and improve the sliding properties on the inner circumferential surface of the bearing 40.

In addition, by structuring the groove 40a as a gap formed between the bushes 20, 20, it is possible to easily adjust the width D of the groove 40a. Specifically, when press-fitting the bushes 20, 20 into the collar 30 to change the length of press-fitting in the axial direction of the collar 30, it is possible to change the width of the gap formed between the bushes 20, 20 and adjust the width D of the groove 40a. Alternatively, by changing the length of the bushes 20, 20, and changing the width of the gap formed between the bushes 20, 20, it is possible to adjust the width D of the groove 40a

In addition, in the bearing 40 which is a sliding member related to the present embodiment, by press-fitting two bushes 20, 20 which are cylindrical members from both sides of the collar 30 which is a cylindrical member, the gap formed between the bushes 20, 20 in the inner peripheral surface of the collar 30 is formed as a groove 40a for lubricating oils 53.

By adopting the structure described above, less effort is required as compared with the case of press-fitting the two bushes 20, 20 from one side of the collar 30 when press-fitting each bush 20, 20 into the collar 30, it is possible to former a groove 40a for lubricating oil 53 in a simple configuration. That is, grooves or indentations can be easily formed in the inner circumferential surface of the bearing 40, and it is possible to improve the sliding properties on the inner circumference of the bearing 40.

In addition, in the bearing 40 which is a sliding member related to the present embodiment, as is shown in Fig. 5 (a), three layers, the sintered layer 11, the back metal 15, and the collar 30 are arranged towards the outside from the inside. In addition, the surface hardness of each layer is arranged so that they become smaller toward the outside from the inside.

By adopting the structure as described above, seizure is less likely to occur on the outer circumferential surface of the bearing 40 when it is pressed into the housing. Specifically, because the heat treatment is not performed on the collar 30 arranged on the outer periphery of the bearing 40, the surface hardness of the collar 30 is smaller compared to the back metal 15 etc. As a result, it is becomes possible to suppress the occurrence of seizure at the part of collar 30 which contacts the housing when it is pressed into the housing.

In addition, by arranging the collar 30 which has not been heat treated on the outer periphery, it is possible to reduce the overall hardness of the bearing 40. In this way, it is possible, it is possible to reduce the strong contact stress which are generated locally on the bearing 40, wear resistance and seizure resistance are improved and the bearing hardly cracks.

In addition, even in the case when forming the bearing 40 with a large thickness (radial direction thickness), it is possible to make the thickness of the sintered alloy 10 constant by adjusting the radial thickness of the collar 30. As a result, it is possible to easily mold even when the thickness of the bearing 40 is large. Furthermore, in the present embodiment, although two bushes 20, 20 are press-fitted into the collar 30, it is possible for example to press-fit three bushes 20, 20, 20 into the collar 30, form a gap using the groove 30a between each bush 20, 20, 20 or press-fit three or more bushes 20, 20... into the collar 30

### [Fourth Embodiment]

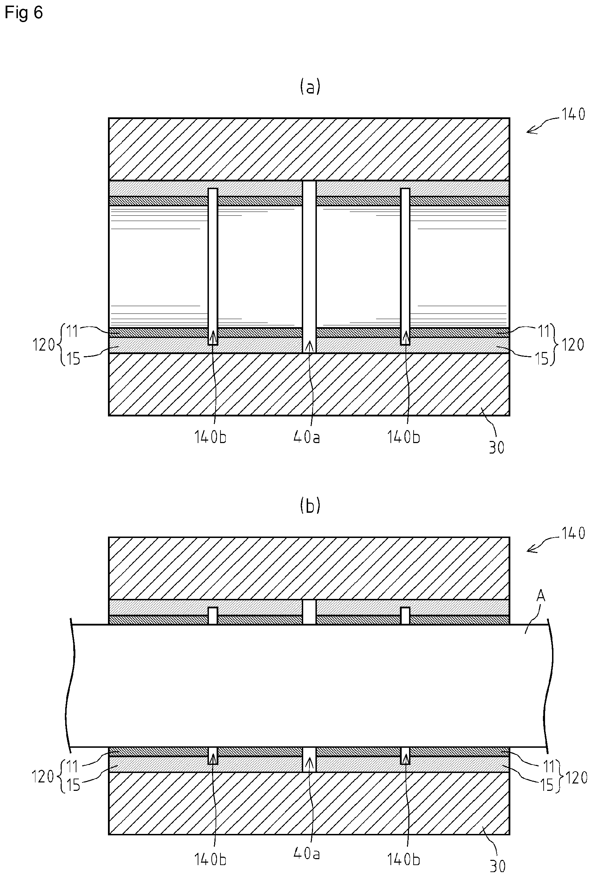

Next, the bearing 140 which is a sliding member related to the fourth embodiment is explained using Fig. 6. Furthermore, because the structure and manufacturing method of the bearing 140 explained in the present embodiment is substantially the same as the third embodiment, parts different to the third embodiment are mainly explained below.

In the bearing 140 which is a sliding member related to the present embodiment, bush 120 is molded by bending a sintered alloy of a bimetal which is formed by sintering a metal powder on the surface of the back metal 15 which is a plate shaped metal member. At this time, a groove 140b is formed as shown in Fig. 6 (a) by a grooving process at the stage of the plate shaped sintered alloy 10. In this way, as is shown in Fig. 6 (b), when the shaft A is inserted through the inner circumferential surface of the bearing 140, separately from the groove 40a, the lubricating oil 53 passes through the interior of the grooves 140b, 140b.

Since it is possible to separately form a groove 140b for lubricating oil 53 or the like even in the case where the number of the grooves 40a formed between the bushes 120,120 is insufficient, the structure related to the present embodiment is particularly useful even if the axial direction length of the bearing 140 is relatively long.

In this way, according to the present embodiment, by forming in advance a groove or indentation using groove or indenting processes in the stage of the plate shape sintered, a groove or indentation is formed in the inner circumferential surface of the bearing 140, and the sliding properties on the inner circumferential surface of the bearing 140 are improved.

### INDUSTRIAL APPLICABILITY

According to the sliding member and the manufacturing method of the sliding member related to the present invention, because seizure is unlikely to occur in the back metal part of the slide member when it is pressed into a housing, it is difficult to crack, and easy to mold grooves or indentations, the invention is industrially useful when manufacturing a sliding member which is particularly excellent in both strength and workability.

## Claims

1. A sliding member (40) adapted to be press-fitted into a housing comprising:
a bimetal sintered alloy formed by sintering a metal powder (11) on a surface of a back metal (15) which is a plate shaped metal member,
wherein the sintered alloy is molded into a cylindrical bush; (20) the bush is performed a heat treatment on; and
the bush is press-fitted into a collar (30) which is a cylindrical metal member and is formed into a cylindrical shape, **characterised in that** the sliding member is arranged with three layers comprising a sintered layer , the back metal , and the collar toward the outside from the inside of the radial direction,
and wherein the hardness of the sintered layer in the bush is formed greater than that of the back metal, and the hardness of the back metal is formed greater than that of the collar.

2. The sliding member according to claim 1, wherein the bush is formed with a groove or indentation in the inner circumferential surface thereof.

3. The sliding member according to claim 1 or claim 2, wherein the collar is formed from a plate shaped member having a clinch shape at both ends and is formed cylindrical by bending the plate shaped member, and wherein the clinch shapes are engaged.

4. A manufacturing method of a sliding member which is adapted to be press-fitted into a housing comprising:
forming a bimetal sintered alloy by sintering a metal powder on a surface of a back metal which is a plate shaped metal member;
molding the sintered alloy into a cylindrical bush;
performing a heat treatment on the bush;
forming into a cylindrical shape by press-fitting the bush into a collar which is a cylindrical metal member;
arranging the sliding member with three layers comprising a sintered layer , the back metal, and the collar towards the outside from the inside thereof; and
forming the sintered layer harder than the back metal,
and forming the back metal harder than the collar.

5. The manufacturing method of a sliding member according to claim 4, wherein a groove or indentation is formed at the sintered alloy and, the bush is formed into cylindrical shape as a surface having the groove or indentation in an inner circumferential surface.

6. The manufacturing method of a sliding member according to claim 4 or claim 5 comprising:
bending a plate shaped member having a clinch shape at both ends
and forming the collar into cylindrical by engaging the clinch shapes.

## Patentansprüche

1. Gleitelement (40), das dafür ausgelegt ist, in ein Gehäuse eingepresst zu werden, wobei das Gleitelement umfasst:
eine Bimetallsinterlegierung, die durch Sintern eines Metallpulvers (11) auf einer Oberfläche eines Rückseitenmetalls (15), das ein plattenförmiges Metallelement ist, gebildet ist, wobei die Sinterlegierung zu einer zylinderförmigen Buchse (20) geformt ist;
wobei an der Buchse eine Wärmebehandlung ausgeführt worden ist; und
wobei die Buchse in einen Ring (30) eingepresst ist, der ein zylinderförmiges Metallelement ist und der zu einer Zylinderform gebildet ist,
**dadurch gekennzeichnet, dass** das Gleitelement mit drei Schichten ausgelegt ist, die in der radialen Richtung von innen nach außen eine Sinterschicht, ein Rückseitenmetall und den Ring umfassen,
und wobei die Härte der Sinterschicht in der Buchse höher als die des Rückseitenmetalls gebildet ist und wobei die Härte des Rückseitenmetalls höher als die des Rings gebildet ist.

2. Gleitelement nach Anspruch 1, wobei die Buchse in ihrer Innenumfangsfläche mit einer Nut oder Vertiefung gebildet ist.

3. Gleitelement nach Anspruch 1 oder Anspruch 2, wobei der Ring aus einem plattenförmigen Element mit einer Klammerform an beiden Enden gebildet ist und durch Biegen des plattenförmigen Elements zylinderförmig gebildet ist und wobei die Klammerformen in Eingriff sind.

4. Herstellungsverfahren für ein Gleitelement, das dafür ausgelegt ist, in ein Gehäuse eingepresst zu werden, wobei das Herstellungsverfahren umfasst:
Bilden einer Bimetallsinterlegierung durch Sintern eines Metallpulvers auf einer Oberfläche eines Rückseitenmetalls, das ein plattenförmiges Metallelement ist;
Formen der Sinterlegierung zu einer zylinderförmigen Buchse;
Ausführen einer Wärmebehandlung an der Buchse;
Bilden der Buchse zu einer Zylinderform durch Einpressen in einen Ring, der ein zylinderförmiges Metallelement ist;
Auslegen des Gleitelements mit drei Schichten, die von ihrer Innenseite zu ihrer Außenseite eine Sinterschicht, das Rückseitenmetall und den Ring umfassen; und
Bilden der Sinterschicht härter als das Rückseitenmetall,
und Bilden des Rückseitenmetalls härter als der Ring.

5. Herstellungsverfahren eines Gleitelements nach Anspruch 4, wobei in der Sinterlegierung eine Nut oder Vertiefung gebildet wird und wobei die Buchse als eine Oberfläche mit einer Nut oder Vertiefung in einer Innenumfangsfläche zu einer Zylinderform gebildet wird.

6. Herstellungsverfahren eines Gleitelements nach Anspruch 4 oder Anspruch 5, wobei das Herstellungsverfahren umfasst:
Biegen eines plattenförmigen Elements mit einer Klammerform an beiden Enden
und Bilden des Rings zu einer Zylinderform durch Eingriff der Klammerformen.

## Revendications

1. Membre coulissant (40) adapté pour être inséré en force dans un logement comprenant :
un alliage fritté bimétallique formé par le frittage d'une poudre métallique (11) sur une surface d'un métal arrière (15) qui est un membre métallique en forme de plaque,
dans lequel l'alliage fritté est moulé en un manchon cylindrique (20) ;
le manchon subit un traitement thermique ; et
le manchon est inséré en force dans un collier (30) qui est un membre métallique cylindrique et a une forme cylindrique,
**caractérisé en ce que**
le membre coulissant est agencé avec trois couches comprenant une couche frittée, le métal arrière et le collier vers l'extérieur depuis l'intérieur de la direction radiale,
et dans lequel la dureté de la couche frittée dans le manchon est formée supérieure à celle du métal, et la dureté du métal arrière est formée supérieure à celle du collier.

2. Membre coulissant selon la revendication 1, dans lequel le manchon est formé avec une rainure ou une indentation dans la surface circonférentielle intérieure de celui-ci.

3. Membre coulissant selon la revendication 1 ou 2, dans lequel le collier est formé à partir d'un membre en forme de plaque ayant une forme d'attache aux deux extrémités et est cylindrique en pliant le membre en forme de plaque, et dans lequel les formes d'attache sont engagées.

4. Procédé de fabrication d'un membre coulissant qui est adapté pour être inséré en force dans un logement comprenant :
la formation d'un alliage fritté bimétallique formé par le frittage d'une poudre métallique sur une surface d'un métal arrière qui est un membre métallique en forme de plaque,
le moulage de l'alliage fritté en un manchon cylindrique ;
la réalisation d'un traitement thermique sur le manchon ;
la formation en cylindre par insertion en force du manchon dans un collier qui est un membre métallique cylindrique ;
l'agencement du membre coulissant avec trois couches comprenant une couche frittée, le métal arrière et le collier vers l'extérieur depuis l'intérieur de celui-ci,
et la formation de la couche frittée plus dure que le métal arrière,
et la formation du métal arrière plus dure que le collier.

5. Procédé de fabrication d'un membre coulissant selon la revendication 4, dans lequel une rainure ou une indentation est formée sur l'alliage fritté et, le manchon est formé en un cylindre en tant qu'une surface ayant la rainure ou l'indentation dans une surface circonférentielle intérieure.

6. Procédé de fabrication d'un membre coulissant selon les revendications 4 ou 5, comprenant :
de plier un membre en forme de plaque ayant une forme d'attache aux deux extrémités
et la formation du collier en cylindre en engageant les formes d'attache.
